# EUROPEAN PATENT APPLICATION

(11) **EP 3 570 171 A1**
(43) Date of publication of application: **20.11.2019**
(21) Application number: 19173599.2
(22) Date of filing: 09.05.2019
(51) Int. Cl.: G06F 11/30, G06F 11/34, G06F 17/18, G06N 20/00, G06N 20/20, G06Q 10/04, G06Q 30/02, H04L 12/24, H04L 12/26

(54) **SYSTEMS AND METHOD FOR INCIDENT FORECASTING**

(30) Priority: 14.05.2018 US 201815979122
(71) Applicant: ServiceNow, Inc., Santa Clara, CA 95054 (US)
(72) Inventor: TABAK, Aida Rikovic, Santa Clara, CA 95054 (US); SHAHAND, Shayan, Santa Clara, CA 95054 (US); MOHAMED, Ahmed Hany Abdelaziz, Santa Clara, CA 95054 (US); NAGARAJAN, Abhijith Thette, Santa Clara, CA 95054 (US); NINNESS, Robert Andrew, Santa Clara, CA 95054 (US)
(74) Representative: Boult Wade Tennant LLP

(57) **Abstract**

A system includes a memory and a processor configured to analyze a data set to determine a first number of incidents during a first period of time and a second number of incidents during a second period of time, train a plurality of models predict a number of incidents during the second period of time, wherein the plurality of respective models comprise a random forest model, a drift model, and a naive seasonal drift model, identifying the model that best predicted the number of incidents during the second period of time, and utilizing the identified model to predict a third number of incidents within a set allowable range of values during a third period of time, and upper and lower limits of the third number of incidents during the third period of time based on a set confidence level and displaying the third number of incidents during the third period of time.

## Description

### BACKGROUND

Cloud computing relates to the sharing of computing resources that are generally accessed via the Internet. In particular, a cloud computing infrastructure allows users, such as individuals and/or enterprises, to access a shared pool of computing resources, such as servers, storage devices, networks, applications, and/or other computing based services. By doing so, users are able to access computing resources on demand that are located at remote locations, which resources may be used to perform a variety computing functions (e.g., storing and/or processing large quantities of computing data). For enterprise and other organization users, cloud computing provides flexibility in accessing cloud computing resources without accruing large up-front costs, such as purchasing expensive network equipment or investing large amounts of time in establishing a private network infrastructure. Instead, by utilizing cloud computing resources, users are able redirect their resources to focus on their enterprise's core functions.

In modern communication networks, examples of cloud computing services a user may utilize include so-called infrastructure as a service (IaaS), software as a service (SaaS), and platform as a service (PaaS) technologies. IaaS is a model in which providers abstract away the complexity of hardware infrastructure and provide rapid, simplified provisioning of virtual servers and storage, giving enterprises access to computing capacity on demand. In such an approach, however, a user may be left to install and maintain platform components and applications. SaaS is a delivery model that provides software as a service rather than an end product. Instead of utilizing a local network or individual software installations, software is typically licensed on a subscription basis, hosted on a remote machine, and accessed by client customers as needed. For example, users are generally able to access a variety of enterprise and/or information technology (IT)-related software via a web browser. PaaS acts an extension of SaaS that goes beyond providing software services by offering customizability and expandability features to meet a user's needs. For example, PaaS can provide a cloud-based developmental platform for users to develop, modify, and/or customize applications and/or automating enterprise operations without maintaining network infrastructure and/or allocating computing resources normally associated with these functions.

In some cases, tracking one or more metrics associated with the cloud computing services may help to achieve more efficient allocation of cloud computing resources and/or a more streamlined cloud computing service.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

Information Technology (IT) networks may include a number of computing devices, server systems, databases, and the like that generate, collect, and store information. As increasing amounts of data representing vast resources become available, it becomes increasingly difficult to analyze the data, interact with the data, and/or provide reports for the data. The current embodiments enable customized widgets to be generated for such data, enabling a visualization of certain indicators for the data for rapid and/or real-time monitoring of the data.

For example, in an embodiment, a system configured to create analytics widgets in a guided widget creation workflow is associated with a computational instance of a remote platform that remotely manages a managed network. The system includes a database containing analytics data associated with the managed network, the analytics data defining indicators or metrics. The remote platform is configured to present a portion of the computational instance on a graphical user interface (GUI) via a display connected to a computing device having access to the computational instance. Incident data is collected over first and second periods of time. Incident data from the first period of time is used to train a plurality of predictive models, which may be variable in length. The predictive models are then used to predict incident data over the second period of time. The predictions from the plurality of models are then compared to the collected incident data over the second period of time. The predictive model that best predicted the collected data over the second period of time is selected and used to predict incident data over a third period of time. In some embodiments, the incident data may include a number of open incidents, a number of new incidents, a number of closed incidents, a total number of incidents, or some other value. In some embodiments, the predicted incident data may be constrained within an allowable range of values that is configurable by the user. The predicted incident data may also include a range of values for incident data within a set confidence interval. The collected incident data over the first and/or second periods of time and the predicted incident data over the third period of time may then be incorporated into a graphical display of a graphical user interface (e.g., a widget of a dashboard).

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

Various aspects of this disclosure may be better understood upon reading the following detailed description and upon reference to the drawings in which:
FIG. 1 is a block diagram of an embodiment of a multi-instance cloud architecture in which embodiments of the present disclosure may operate;
FIG. 2 is a block diagram of a computing device utilized in the distributed computing system of FIG. 1, in accordance with an embodiment;
FIG. 3 is a block diagram of a computing device utilized in a computing system that may be present in FIGS. 1 or 2, in accordance with aspects of the present disclosure;
FIG. 4 is a block diagram illustrating performance analytics and reporting (PAR) features facilitated through a homepage and/or dashboard, in accordance with an embodiment;
FIGS. 5 is a screen shot of a GUI configured to facilitate generation of analytics and/or reporting widgets on an embodiment of the homepage or an embodiment of the dashboard, in accordance with an embodiment;
FIG. 6 is a screen shot of a data selection portion of a guided widget creation workflow in which an incident table has been selected, in accordance with an embodiment;
FIG. 7 is a screen shot of the GUI displaying an area time series chart of incident data, in accordance with an embodiment;
FIG. 8 is a screen shot of the GUI displaying a graph of incident data, in accordance with an embodiment;
FIG. 9 is a graph illustrating of how an incident forecast line is generated, in accordance with an embodiment;
FIG. 10 is a screen shot of the GUI displaying an incident forecasting widget, including user configuration drop-down menus, in accordance with an embodiment;
FIG. 11 is a screen shot of the GUI displaying the incident forecasting widget displaying a forecasting range, in accordance with an embodiment; and
FIG. 12 is a flow chart of a process for forecasting incident data, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and enterprise-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

As used herein, the term "computing system" refers to a single electronic computing device that includes, but is not limited to a single computer, virtual machine, virtual container, host, server, laptop, and/or mobile device, or to a plurality of electronic computing devices working together to perform the function described as being performed on or by the computing system. As used herein, the term "medium" refers to one or more non-transitory, computer-readable physical media that together store the contents described as being stored thereon. Embodiments may include nonvolatile secondary storage, read-only memory (ROM), and/or random-access memory (RAM). As used herein, the term "application" refers to one or more computing modules, programs, processes, workloads, threads and/or a set of computing instructions executed by a computing system. Example embodiments of an application include software modules, software objects, software instances and/or other types of executable code. As used herein, the terms alerts, incidents (INTs), changes (CHGs), and problems (PRBs) are used in accordance with the generally accepted use of the terminology for CMDBs. Moreover, the term "issues" with respect to a CI of a CMDB collectively refers to alerts, INTs, CHGs, and PRBs associated with the CI.

The disclosed subject matter includes techniques for predicting future values based on patterns observed in collected historical data. Specifically, the instant embodiments are directed to forecasting incident data in computer networks. However, it should be used that similar techniques may be used for a wide range of data collected from a wide range of data sources. In the present embodiments, incident data is collected over first and second periods of time. Incident data from the first period of time is used to train a plurality of predictive models. The predictive models are then used to predict incident data over the second period of time. The predictions from the plurality of models are then compared to the collected incident data over the second period of time. The predictive model that best predicted the collected data over the second period of time is selected and used to predict incident data over a third period of time. In some embodiments, the incident data may include a number of open incidents, a number of new incidents, a number of closed incidents, a total number of incidents, or some other value. In some embodiments, the predicted incident data may be constrained within an allowable range of values that is configurable by the user. The predicted incident data may also include a range of values for incident data within a set confidence interval. The collected incident data over the first and/or second periods of time and the predicted incident data over the third period of time may then be incorporated into a graphical display of a graphical user interface (e.g., a widget of a dashboard).

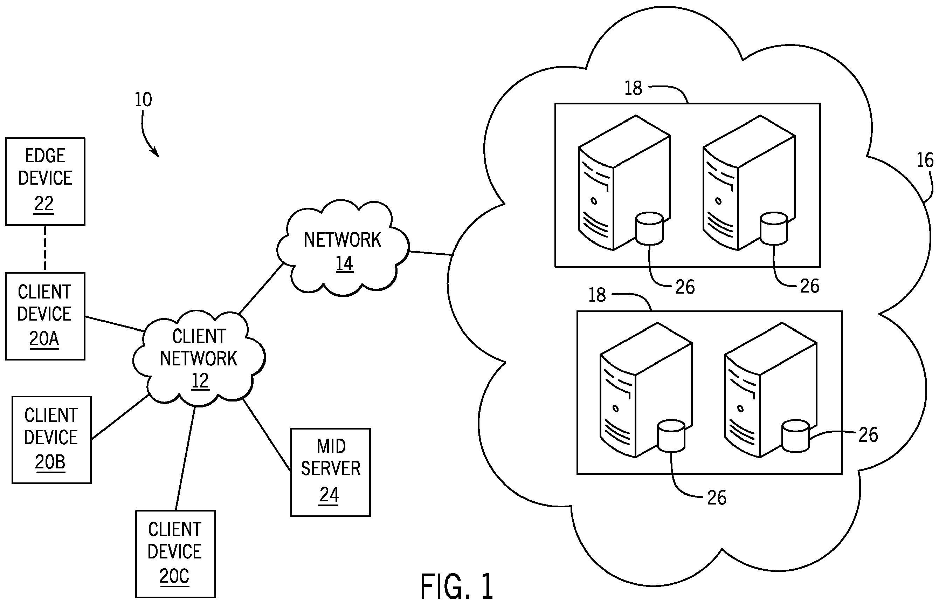

With the preceding in mind, the following figures relate to various types of generalized system architectures or configurations that may be employed to provide services to an organization in a multi-instance framework on which the present approaches may be employed. Correspondingly, these system and platform examples may also relate to systems and platforms on which the techniques discussed herein may be implemented or otherwise utilized. Turning now to FIG. 1, a schematic diagram of an embodiment of a computing system 10, such as a cloud computing system, in which embodiments of the present disclosure may operate, is illustrated. The computing system 10 may include a client network 12, a network 14 (e.g., the Internet), and a cloud-based platform 16. In some implementations, the cloud-based platform 16 may be a configuration management database (CMDB) platform. In one embodiment, the client network 12 may be a local private network, such as local area network (LAN) that includes a variety of network devices that include, but are not limited to, switches, servers, and routers. In another embodiment, the client network 12 represents an enterprise network that could include one or more LANs, virtual networks, data centers 18, and/or other remote networks. As shown in FIG. 1, the client network 12 is able to connect to one or more client devices 20A, 20B, and 20C so that the client devices are able to communicate with each other and/or with the network hosting the platform 16. The client devices 20 may be computing systems and/or other types of computing devices generally referred to as Internet of Things (IoT) devices that access cloud computing services, for example, via a web browser application or via an edge device 22 that may act as a gateway between the client devices 20 and the platform 16. FIG. 1 also illustrates that the client network 12 includes a management, instrumentation, and discovery (MID) server 24 that facilitates communication of data between the network hosting the platform 16, other external applications, data sources, and services, and the client network 12. Although not specifically illustrated in FIG. 1, the client network 12 may also include a connecting network device (e.g., a gateway or router) or a combination of devices that implement a customer firewall or intrusion protection system.

For the illustrated embodiment, FIG. 1 illustrates that client network 12 is coupled to the network 14, which may include one or more computing networks, such as other LANs, wide area networks (WAN), the Internet, and/or other remote networks, in order to transfer data between the client devices 20 and the network hosting the platform 16. Each of the computing networks within network 14 may contain wired and/or wireless programmable devices that operate in the electrical and/or optical domain. For example, network 14 may include wireless networks, such as cellular networks (e.g., Global System for Mobile Communications (GSM) based cellular network), WiFi® networks (WIFI is a registered trademark owned by Wi-Fi Alliance Corporation), and/or other suitable radio-based networks. The network 14 may also employ any number of network communication protocols, such as Transmission Control Protocol (TCP) and Internet Protocol (IP). Although not explicitly shown in FIG. 1, network 14 may include a variety of network devices, such as servers, routers, network switches, and/or other network hardware devices configured to transport data over the network 14.

In FIG. 1, the network hosting the platform 16 may be a remote network (e.g., a cloud network) that is able to communicate with the client devices 20 via the client network 12 and network 14. The network hosting the platform 16 provides additional computing resources to the client devices 20 and/or the client network 12. For example, by utilizing the network hosting the platform 16, users of the client devices 20 are able to build and execute applications for various enterprise, IT, and/or other organization-related functions. In one embodiment, the network hosting the platform 16 is implemented on the one or more data centers 18, where each data center could correspond to a different geographic location. Each of the data centers 18 includes a plurality of virtual servers 26 (also referred to herein as application nodes, application servers, virtual server instances, application instances, or application server instances), where each virtual server 26 can be implemented on a physical computing system, such as a single electronic computing device (e.g., a single physical hardware server) or across multiple-computing devices (e.g., multiple physical hardware servers). Examples of virtual servers 26 include, but are not limited to a web server (e.g., a unitary Apache installation), an application server (e.g., unitary Java® Virtual Machine), and/or a database server, e.g., a unitary MySQL® catalog (MySQL® is a registered trademark owned by MySQL AB A COMPANY).

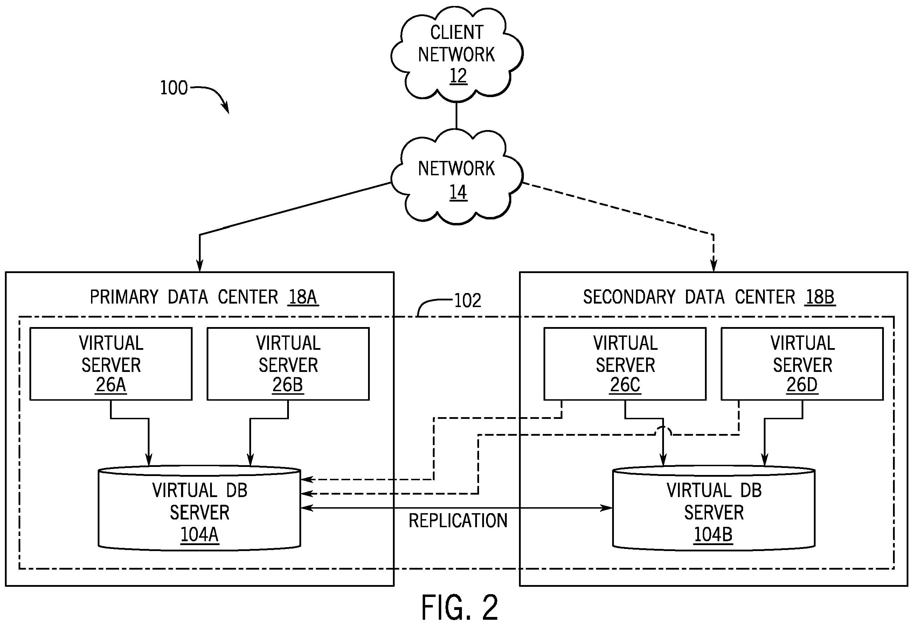

To utilize computing resources within the platform 16, network operators may choose to configure the data centers 18 using a variety of computing infrastructures. In one embodiment, one or more of the data centers 18 are configured using a multi-instance cloud architecture to provide every customer its own unique customer instance or instances. For example, a multi-instance cloud architecture could provide each customer instance with its own dedicated application server and dedicated database server. In other examples, the multi-instance cloud architecture could deploy a single physical or virtual server 26 and/or other combinations of physical and/or virtual servers 26, such as one or more dedicated web servers, one or more dedicated application servers, and one or more database servers, for each customer instance. In a multi-instance cloud architecture, multiple customer instances could be installed on one or more respective hardware servers, where each customer instance is allocated certain portions of the physical server resources, such as computing memory, storage, and processing power. By doing so, each customer instance has its own unique software stack that provides the benefit of data isolation, relatively less downtime for customers to access the platform 16, and customer-driven upgrade schedules. An example of implementing a customer instance within a multi-instance cloud architecture will be discussed in more detail below with reference to FIG. 2.

FIG. 2 is a schematic diagram of an embodiment of a multi-instance cloud architecture 40 where embodiments of the present disclosure may operate. FIG. 2 illustrates that the multi-instance cloud architecture 100 includes the client network 12 and the network 14 that connect to two (e.g., paired) data centers 18A and 18B that may be geographically separated from one another. Using FIG. 2 as an example, network environment and service provider cloud infrastructure client instance 102 (also referred to herein as a simply client instance 102) is associated with (e.g., supported and enabled by) dedicated virtual servers 26 (e.g., virtual servers 26A, 26B, 26C, and 26D) and dedicated database servers (e.g., virtual database servers 104A and 104B). Stated another way, the virtual servers 26A, 26B, 26C, 26D and virtual database servers 104A, 104B are not shared with other client instances but are specific to the respective client instance 102. Other embodiments of the multi-instance cloud architecture 100 could include other types of dedicated virtual servers, such as a web server. For example, the client instance 102 could be associated with (e.g., supported and enabled by) the dedicated virtual servers 26A, 26B, 26C, 26D, dedicated virtual database servers 104A, 104B, and additional dedicated virtual web servers (not shown in FIG. 2).

In the depicted example, to facilitate availability of the client instance 102, the virtual servers 26A, 26B, 26C, 26D and virtual database servers 104A, 104B are allocated to two different data centers 18A, 18B, where one of the data centers 18 acts as a backup data center 18. In reference to FIG. 2, data center 18A acts as a primary data center 18A that includes a primary pair of virtual servers 26A, 26B and the primary virtual database server 104A associated with the client instance 102, and data center 18B acts as a secondary data center 18B to back up the primary data center 18A for the client instance 102. To back up the primary data center 18A for the client instance 102, the secondary data center 18B includes a secondary pair of virtual servers 26C, 26D and a secondary virtual database server 104B. The primary virtual database server 104A is able to replicate data to the secondary virtual database server 104B.

As shown in FIG. 2, the primary virtual database server 104A may replicate data to the secondary virtual database server 104B using, e.g., a Master-Master MySQL Binlog replication operation. The replication of data between data could be implemented by performing full backups weekly and daily incremental backups in both data centers 18A, 18B. Having both a primary data center 18A and secondary data center 18B allows data traffic that typically travels to the primary data center 18A for the client instance 102 to be diverted to the second data center 18B during a failure and/or maintenance scenario. Using FIG. 2 as an example, if the virtual servers 26A, 26B and/or primary virtual database server 104A fails and/or is under maintenance, data traffic for client instances 102 can be diverted to the secondary virtual servers 26C, 26D and the secondary virtual database server instance 104B for processing.

Although FIGS. 1 and 2 illustrate specific embodiments of a cloud computing system 10 and a multi-instance cloud architecture 100, respectively, the disclosure is not limited to the specific embodiments illustrated in FIGS. 1 and 2. For instance, although FIG. 1 illustrates that the platform 16 is implemented using data centers, other embodiments of the platform 16 are not limited to data centers and can utilize other types of remote network infrastructures. Moreover, other embodiments of the present disclosure may combine one or more different virtual servers into a single virtual server. Using FIG. 2 as an example, the virtual servers 26A, 26B, 26C, 26D and virtual database servers 104A, 104B may be combined into a single virtual server. The use and discussion of FIGS. 1 and 2 are only examples to facilitate ease of description and explanation and are not intended to limit the disclosure to the specific examples illustrated therein.

As may be appreciated, the respective architectures and frameworks discussed with respect to FIGS. 1 and 2 incorporate computing systems of various types (e.g., servers, workstations, client devices, laptops, tablet computers, cellular telephones, and so forth) throughout. For the sake of completeness, a brief, high level overview of components typically found in such systems is provided. As may be appreciated, the present overview is intended to merely provide a high-level, generalized view of components typical in such computing systems and should not be viewed as limiting in terms of components discussed or omitted from discussion.

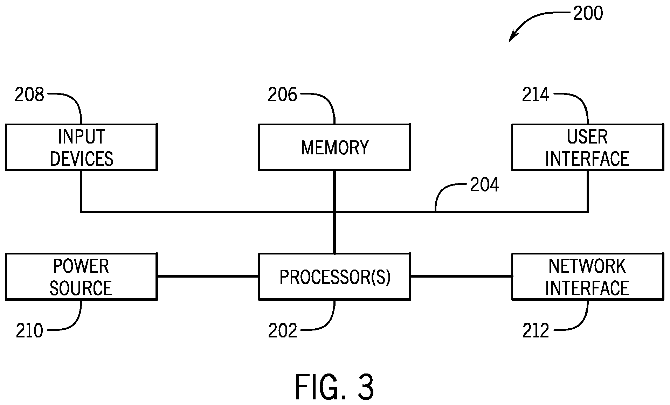

With this in mind, and by way of background, it may be appreciated that the present approach may be implemented using one or more processor-based systems such as shown in FIG. 3. Likewise, applications and/or databases utilized in the present approach stored, employed, and/or maintained on such processor-based systems. As may be appreciated, such systems as shown in FIG. 3 may be present in a distributed computing environment, a networked environment, or other multi-computer platform or architecture. Likewise, systems such as that shown in FIG. 3, may be used in supporting or communicating with one or more virtual environments or computational instances on which the present approach may be implemented.

With this in mind, an example computer system may include some or all of the computer components depicted in FIG. 3. FIG. 3 generally illustrates a block diagram of example components of a computing system 200 and their potential interconnections or communication paths, such as along one or more busses. As illustrated, the computing system 200 may include various hardware components such as, but not limited to, one or more processors 202, one or more busses 204, memory 206, input devices 208, a power source 210, a network interface 212, a user interface 214, and/or other computer components useful in performing the functions described herein.

The one or more processors 202 may include one or more microprocessors capable of performing instructions stored in the memory 206. Additionally or alternatively, the one or more processors 202 may include application-specific integrated circuits (ASICs), field-programmable gate arrays (FPGAs), and/or other devices designed to perform some or all of the functions discussed herein without calling instructions from the memory 206.

With respect to other components, the one or more busses 204 includes suitable electrical channels to provide data and/or power between the various components of the computing system 200. The memory 206 may include any tangible, non-transitory, and computer-readable storage media. Although shown as a single block in FIG. 1, the memory 206 can be implemented using multiple physical units of the same or different types in one or more physical locations. The input devices 208 correspond to structures to input data and/or commands to the one or more processor 202. For example, the input devices 208 may include a mouse, touchpad, touchscreen, keyboard and the like. The power source 210 can be any suitable source for power of the various components of the computing device 200, such as line power and/or a battery source. The network interface 212 includes one or more transceivers capable of communicating with other devices over one or more networks (e.g., a communication channel). The network interface 212 may provide a wired network interface or a wireless network interface. A user interface 214 may include a display that is configured to display text or images transferred to it from the one or more processors 202. In addition and/or alternative to the display, the user interface 214 may include other devices for interfacing with a user, such as lights (e.g., LEDs), speakers, and the like.

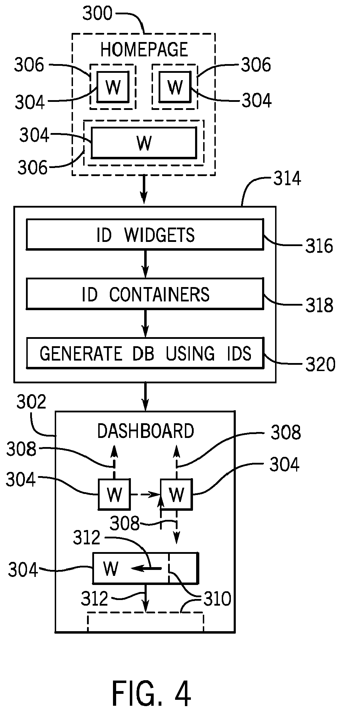

The discussion now turns to a mechanism for displaying system data, enabling interactivity with the system data, and reporting on the system data. FIG. 4 is a block diagram illustrating performance analytics and reporting (PAR) features facilitated through a homepage 300 and/or dashboard 302, in accordance with an embodiment. As used herein, a "homepage" refers to a graphical-user-interface (GUI) screen where data-driven widgets 304 may be placed in pre-defined containers 306 that have a static placement and/or size.

In some embodiments, it may be desirable to enable customized positioning and/or sizing of widgets 304. Accordingly, the dashboard 302 may be used to provide such features. As used herein, the term "dashboard" refers to a graphical-user-interface (GUI) screen where data-driven widgets 304 may be placed on the screen without being constrained to pre-defined containers 306 and/or static placement and/or size. In other words, for the dashboard 302, the widgets 304 may be dynamically moved to any location on the dashboard 302 without being constrained to pre-defined locations, as indicated by arrows 308. Further, the size of the widgets 304 may be dynamically altered in the dashboard 302, as indicated by sizing indicators 310 and arrows 312.

As there may be more flexibility in configuring a dashboard 302 over a homepage 300, it may be desirable in certain situations to convert a homepage 300 to a dashboard 302. Indeed, it may be burdensome to generate dashboards 302 from scratch after time and effort may have already been afforded to creating a homepage 300. Accordingly, in some embodiments, a conversion process 314 may be implemented to convert a homepage 300 to a dashboard 302.

The conversion process 314 may identify the widgets 304 found on the homepage 300 (block 316). For example, a computer-readable representation of the homepage 300 (e.g., a homepage object) may be traversed to identify each of the widgets 304 on the homepage 300.

Further, the conversion process 314 may identify the containers 306 and their associated sizes and placements for the identified widgets 304 found on the homepage 300 (block 318). For example, the computer-readable representation of the homepage 300 (e.g., a homepage object) may be traversed to identify each of containers 306 containing the widgets 304 on the homepage 300. Position and/or size attributes of the containers 306 may be identified by accessing object attributes of the computer-readable representation of the homepage 300.

Once the widgets 304 and the containers 306 and their attributes are identified. A corresponding dashboard 302 may be generated (block 320). For example, computer instructions may generate a computer-readable representation of the homepage 300, inserting the widgets 304 at the position and/or size identified by the container 306 attributes. Once the dashboard 302 is generated, it may be accessed and the size and position of the widgets 304 may be modified dynamically.

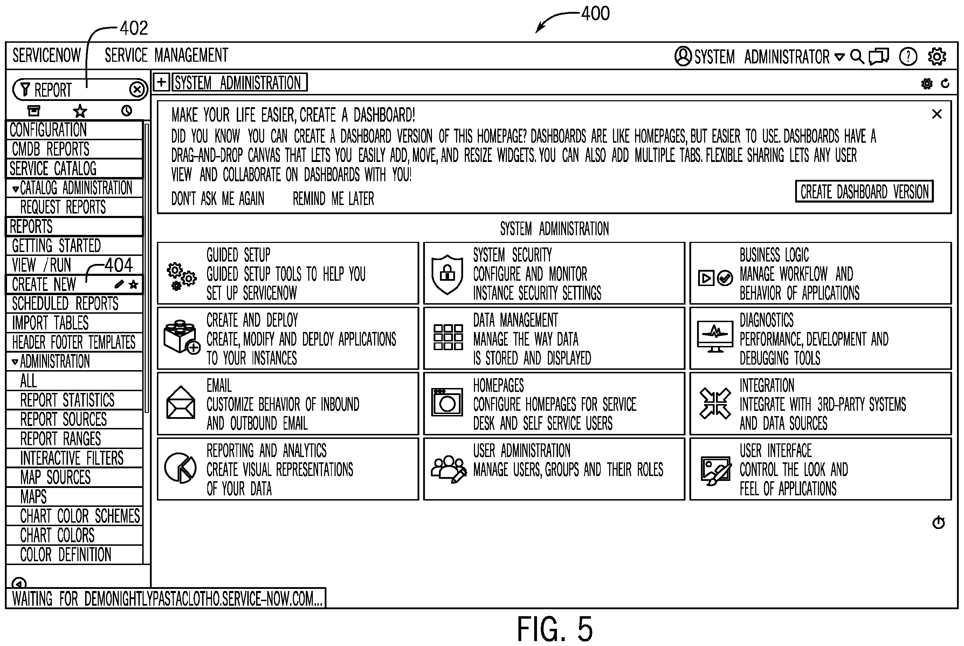

The widgets 304 may be independent data-driven software that perform particular tasks. For example, the widgets 304 may provide visualizations generated based upon datasets of the system, such as those present within database. In accordance with certain aspects of the present disclosure, the widgets 304 are generated according to a guided workflow presented as a part of a graphical user interface (GUI) 400, an example of which is illustrated in FIG. 5. The illustrated GUI 400 is configured to facilitate generation of analytics and/or reporting widgets on an embodiment of the homepage or an embodiment of the dashboard. Though widgets may be created for a wide range of functions, the instant embodiments are focused on tracking and forecasting incidents. Depending on the data being tracked, an "incident" may be any occurrence that a user is interested in tracking and/or forecasting. For example, in some embodiments, an incident may be the opening of a service ticket, the number of open service tickets on a given day, a network outage, a hardware failure, a software failure, a login failure, a request for action, an unfulfilled purchase request, a security breach, a virus or malware warning, an event, a filed complaint, or any other occurrence or metric a user is interested on monitoring.

However, these techniques may be used to predict future values for a wide range of statistics or metrics. For example, in the area of application portfolio management, these techniques may be used to predict average cost per user by week, month, quarter, or year. In the area of configuration management databases (CMDBs), these techniques may be used to predict the sum cost of configuration items (CIs), number of open changes to CIs, number of monitored CIs, etc. In the area of customer service case management these techniques may be used to predict number of cases closed per agent per month, summed re-assignment count of open cases, number of open cases not updated in the last 5 days, etc. In the area of discovery these techniques may be used to predict sum duration of jobs executed in a day. In the area of financial management these techniques may be used to predict total expenses, top spenders, annual planned budget, operational expenditure (OPEX), capital expenditure (CAPEX), etc. In the area of human resources these techniques may be used to predict average time taken for onboarding activities, new hire satisfaction survey results, summed duration of onboarding action items, etc. In the area of knowledge management these techniques may be used to predict number of published articles flagged, average article rating, summed length or published articles, etc. In the area of project portfolio management, these techniques may be used to predict the summed overdue age of project tasks, the project task backlog growth, etc. It should be understood, however, that the preceding enumerated examples

As shown in FIG. 5, the GUI 400 includes an action menu 402, from which a user may select various actions that can be taken via the GUI 400. In FIG. 5, "report" is selected in the action menu 402. When "report" is selected, the user may view existing or past reports, run new reports based on existing report templates, or generate new report templates. To generate new report templates, the user may select the create new button 404, which may cause the GUI 400 to display one or more screens (e.g., the dashboard described with regard to FIG. 3), each with one or more options (e.g., the widgets described with regard to FIG. 3) that allow a user to set up and configure a new report. For example, the platform (e.g., the instance) may visually present a widget creation application via the GUI 400 in response to the "Create New" button 404 being selected. The widget creation application presented via the GUI 400 may include, for example, a configuration section and a data visualization section. Attributes of the data visualization to be created by the widget creation application may be defined in the configuration section, while the data visualization itself is rendered within the data visualization section. Thus, the GUI 400 presents adjustable attributes associated with the data visualization in tandem with presenting the data visualization, enabling the GUI 400 to render the data visualization to demonstrate the effect of changing certain attributes of the data visualization as the widget is being created. In some embodiments, the user may be prompted to select data (e.g., accessed via the database) for generation of a data visualization and/or a report. For example, the user may select one or more tables, or one or more rows, columns, or fields of a table. Selection of data may cause the data to be visually represented in the widget. For example, selecting an incident table as input data causes a table having data relating to incidents to be used in generating the visualization in the widget.

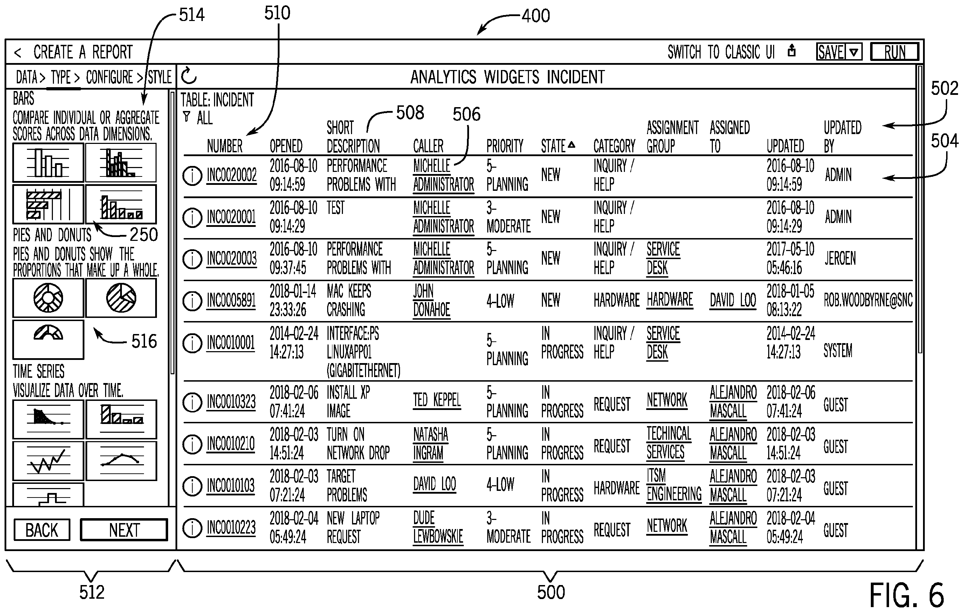

FIG. 6 illustrates a data selection portion of a guided widget creation workflow in which an incident table has been selected. As shown, a data visualization section 500 of the GUI 400 is displaying a table 502 corresponding to the "incident" table selected. More specifically, the illustrated table 502 includes a plurality of data records 504 each relating to a particular incident. The data records 504 may represent all or a part of a data set stored on one or more of the databases for one or more instances associated with the client (e.g., a managed network). The data records 504 include a plurality of data items 506, which may be individually selectable to access certain additional data associated with the data record 504. The table 502 also includes column headings 508 rendered within a header 510.

In a configuration section 512 of the GUI 400, the attribute input fields 514 now include different chart type buttons 516. The GUI 400 displays the different chart types using the data set in the table 502 within the data visualization section 500 in response to a particular chart type button 516 being selected. By way of nonlimiting example, the GUI 400 in FIG. 6 depicts different chart type buttons 516 being associated with different chart types, including bar charts, pie and donut charts, and time series charts. Each chart type button 516 is grouped with a similar chart type button 516 belonging to the same chart type, and includes an example visualization to aid in selection of a desired chart type for the widget.

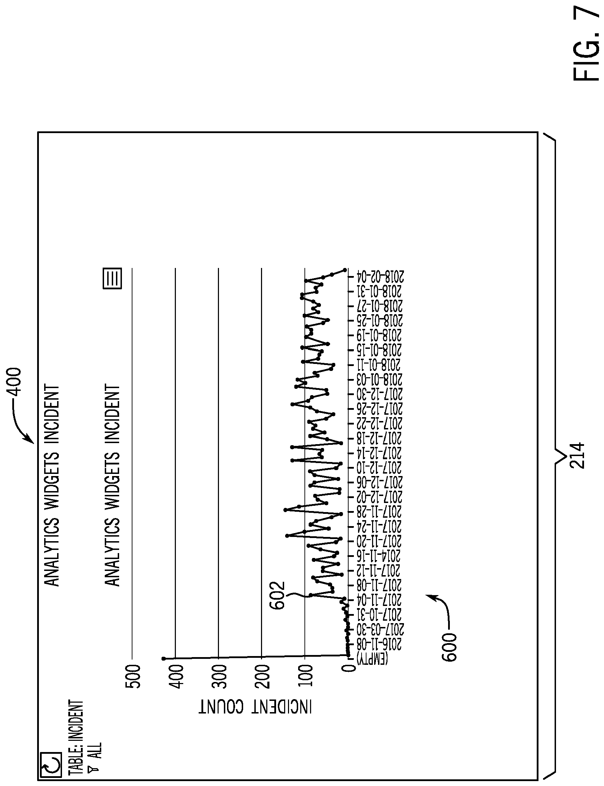

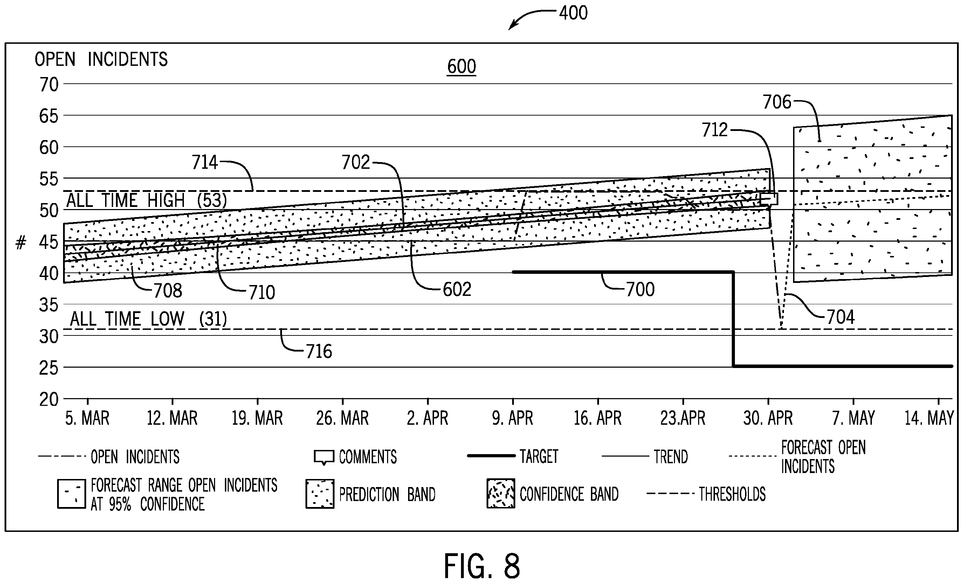

FIG. 7 depicts the GUI 400 as displaying an area time series chart 600, in which the data points are used to produce an open incidents line 602. In the instant embodiment, each data point corresponds to the incident count (i.e., the number of incidents) on a given day. Because the open incidents line 602 is depicted as a function of a variable associated with the data set of the table, the open incidents line 602 may be visualized according to particular aspects of the variable (e.g., time). The open incidents line 602 may be further constructed by aggregating the data from the data set in the table. Thus, attribute input fields may include an "Aggregation" field, which causes the data to be aggregated according to a parameter. For example, in the instant embodiment "Count" may be selected as a aggregating parameter (e.g., via a drop-down menu), meaning that the data is visualized by a "count" of the incidents per "date". Though the time series chart 600 shown in FIG. 7 only includes the raw incident count data points, it should be understood that the GUI 400 can be customized to include a wide range of features and tools. FIG. 8 illustrates a version of the GUI 400 in which the chart 600 includes the open incidents line 602, a target line 700, a trend line 702, a forecast line 704, a forecast range 706, prediction bands 708, confidence bands 710, a comment box 712, a maximum line 714, and a minimum line 716.

The target line 700 is a line of a target number of incidents as a function of date. The target band 700 may be user-defined, or may be user-defined as a function of the number of open incidents at a given date. The trend line 702 demonstrates the manner in which the data (e.g., incidents) trends over the range of dates (e.g., over time) and may be smoothed relative to the open incidents line 602. The prediction band 708 and the confidence band 710 are visualizations in regression analysis of the incident data. The comment box 712 indicates that a comment has been left for that day or data point. When the comment box 712 is selected, the GUI 400 may respond by displaying the comment (e.g., via a pop-up window). The maximum line 714 and the minimum line 716 indicate the maximum and minimum values, respectively, of the plotted incident data.

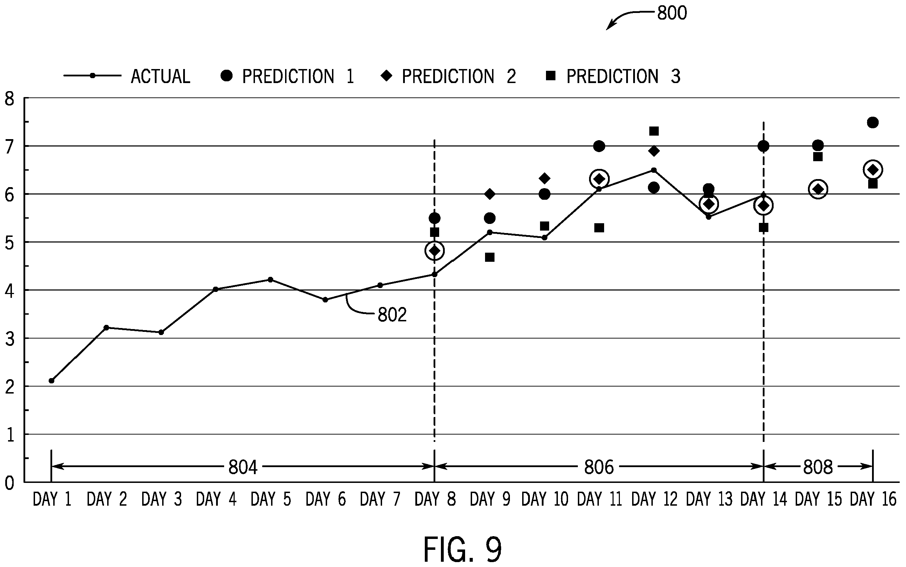

The forecast line 704 depicts how the incidents are forecast to increase, decrease, or remain constant at future dates. The forecast line 704 may be generated using one or more of a plurality of forecasting models based on past incident data over a period of time. The forecast range 706 includes a range of values on either side of the forecast line 704 in which the forecast values are predicted to fall within a set confidence level. FIG. 9 is a graph 800 illustrating of how the forecast line is generated. Line 802 represents incident data (e.g., number open incidents per day) over a first period of time 804 and a second, subsequent, period of time 806. Based on the incident data over the first period of time 804 a plurality of prediction models is used to predict incident data over the second period of time. The prediction models may include, for example, a random forest prediction model, a drift prediction model, a naive seasonal prediction model, a naive seasonal drift prediction model, a linear prediction model, a seasonal trend loess prediction model, or some other prediction model. In the instant embodiment three prediction models are used, but embodiments that use fewer prediction models or more prediction models are also envisaged.

The predicted values from the various prediction models over the second period of time 806 are compared to the actual incident data over the second period of time (indicated by line 802) to determine which of the prediction models had predicted values that were closest to the actual incident data over the second period of time 806. The comparison may include determining the difference between the predicted values and the actual values for each model for each day and adding up the differences or averaging the differences to determine which prediction model best predicted the actual values. In other embodiments, the closest prediction model may be determined for each day and then the predicted model that was closest for the greatest number of days within the second time period 806 may be selected. Other techniques for selecting the closest prediction model may include, for example, root mean squared error (RMSE), Akaike information criterion (AIC), Bayes factor, Bayesian information criterion (BIC), cross validation, deviance information criterion (DIC), efficient determination criterion (EDC), focused information criterion (FIC), Hannan-Quinn information criterion, stepwise regression, Watanable-Akaike information criterion (WAIC), or some other technique for evaluating model fit.

Once one of the prediction models is selected, the prediction model is used to predict incident data for a third period of time 808 based on the incident data for the first period of time 804, the second period of time 806, both, or some other training data set. In some embodiments, an allowable range of values may be set. If the selected prediction model predicts a value below the minimum of the allowable range, the prediction value may be updated to the minimum value of the allowable range or flagged as outside of the allowable range. For example, a user may want to set a lower limit of the allowable range of incident values at zero as there cannot be a negative number of incidents. Similarly, if the selected prediction model predicts a value above the maximum of the allowable range, the prediction value may be updated to the maximum value of the allowable range or flagged as outside of the allowable range. The allowable range may be set by a user, an administrator, an algorithm, or in some other way.

In some embodiments, the selected prediction model may also be used to generate a range of possible values within a confidence level. The model predictions for the third period of time 808 are then graphed as the forecast line. As with the allowable range, the confidence level may be set by a user, an administrator, an algorithm, or in some other way.

As previously discussed, the plurality of prediction models may include, among other prediction models, a random forest prediction model, a drift prediction model, a naive seasonal prediction model, a naive seasonal drift prediction model, a linear prediction model, a seasonal trend loess prediction model, etc. The random forest prediction model is made up of a number of decision trees. Each decision tree takes a random subset of the training data and generates a unique prediction model based on the subset of the training data. The various unique prediction model associated with each decision tree are then combined (e.g., averaged) to form a larger prediction model (i.e., the random forest prediction model). In some embodiments, the most recent period/season may be temporarily removed from the training data set. A lag matrix may then be calculated and random forest model generated for each of a set of maximum lags (e.g., 3, 4, 5, 6, 7, 8, 9, 10, 11, 12, 13, 20, 28, 30, 31, etc.). The maximum lag of the random forest prediction model with the lowest RMSE is then selected. A new random forest model may then be generated by using all of the data and the selected maximum lag value. In the instant embodiment, random forest models are generated using the statistical machine intelligence and learning engine (SMILE) library.

The drift prediction model uses linear regression to determine the slope and intercept of a line that passes through the first and last points of the data and then extends the line to the number of observations to be forecast. The naive seasonal drift prediction model is like the drift prediction model, but projects a seasonal component onto the drift prediction model's trend lines. The seasonal component is calculated by deducting the draft's trend line from the previous period/season of the data.

Prediction model analysis and selection may occur in a continuous, ongoing fashion, or at discreet intervals (e.g., daily, weekly, bi-weekly, monthly, bimonthly, quarterly, annually, etc.). The lengths of the various periods of time may also be adjusted by a user. For example, if a new email platform was implemented 30 days ago, it may be best to setup the system to only use data (e.g., the first period of time) after the new platform was implemented to train the prediction model. However, in other cases, it may be helpful to train the prediction model using as large a training data set as possible. In such cases, the first period of time (i.e., the time covered by the training data set) may be set to extend for a few months or possibly longer. Along these lines, in some cases it may be beneficial to extend the second period of time (i.e., the time period during which predictions from various prediction models are compared to actual data) to ensure that the most accurate prediction model is chosen. In some embodiments, prediction model analysis and selection may be triggered upon request by a user, or when the currently selected model misses a prediction or a series of predictions by some threshold amount.

In some embodiments, the user may override the automatic predictive model selection and force the system to use a predictive model selected by the user. In other embodiments, the user may provide a preference for one model over the others or weight one or more predictive models higher than others, such that the system may be configured to select a higher weighted predictive model unless one of the other lower weighted models performs significantly better than the higher weighted predictive model.

Some embodiments may implement a forecast data caching scheme. For example, forecasted values may be cached in a database table as a comma separated value (CSV) field. If a forecast cache entry is available for a time series, identified by a universally unique identifier (UUID), the forecasted values are available immediately. Otherwise, the forecasted values are calculated according to the settings (e.g., using the automatically selected prediction model). If any of the forecast configurations for a time series have changed, or a new data point has been recorded, or any of the existing data points are edited, then the respective forecast cache entries are invalidated. Changes in the data points may be detected, for example, by calculating a hash of data point values.

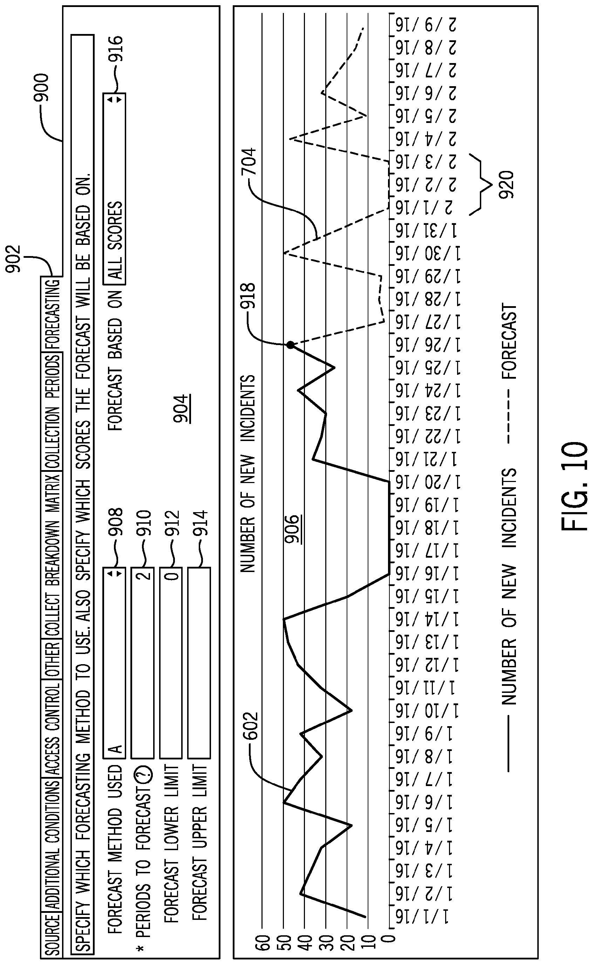

FIG. 10 is a screen shot of an incident forecasting widget 900, which may be one of one or more widgets within a dashboard. In the instant embodiments, widgets may be selected by selecting a tab from a row of tabs 902. The forecasting widget 900 includes a menu window 904 and a graph window 906. The menu window includes a plurality of drop-down menus by which a user can configure the forecasting widget 900. For example, the drop-down menus may include forecasting method 908, forecast period 910, forecast lower limit 912, forecast upper limit 914, data used to generate forecast 916, etc. The forecasting method drop-down menu 908 may allow a user to control how a predictive model is selected. For example, the user may select "automatic" to allow the system to automatically select a predictive model to be user. However, using the forecasting method drop-down menu 908, the user may also select a specific predictive model to be used (e.g., a random forest prediction model, a drift prediction model, a naive seasonal prediction model, a naive seasonal drift prediction model, a linear prediction model, a seasonal trend loess prediction model, etc.), or a weighted system by which a user weights various models. The forecast period drop-down menu 910 allows a user to select a time period for which values are forecast. The forecast lower and upper limit drop-down menus 912, 914 allow a user to set the lower and/or upper limits for forecast values. The data used to generate forecast drop-down menu 916 allows the user to select which data is used to perform the forecasting.

The graph window includes the open incidents line 602, in this case number of new incidents on a given day, up to a point in time 918, wherein the point in time is the time of the most recent measurement. The forecast line 704 starts at the point in time 918 and goes forward, plotting forecasted values for the number of new incidents on days following the point in time 918. As previously discussed, the user may utilize the forecast lower and upper limit drop-down menus 912, 914 to set lower and/or upper limits to forecast values. If the selected predictive model predicts a value below the lower limit or above the upper limit, the predicted value may just be replaced with the lower or upper limit. In the graph window 906 of FIG. 10, the forecast line 704 is at zero between February 1, 2016 and February 3, 2016. During this time period 920, the selected predictive model predicted sub-zero values (i.e., negative values) for the number of new incidents. However, because a negative number of new incidents is not possible, the lower limit drop-down menu 912 was used to set the forecast value lower limit at 0, resulting in the forecast line 704 remaining at zero between February 1, 2016 and February 3, 2016.

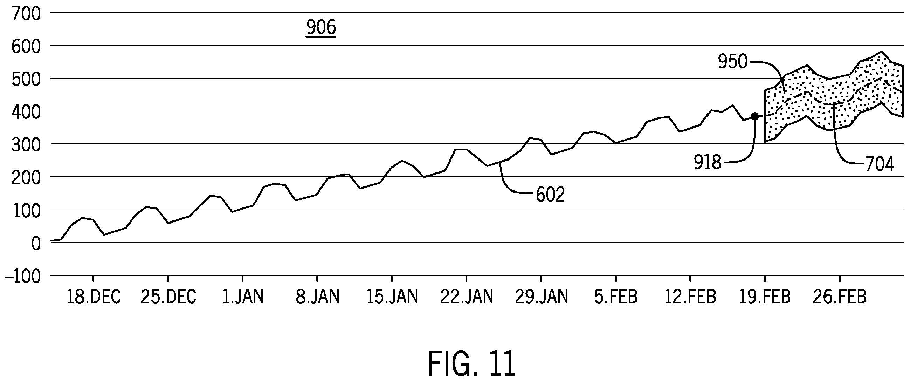

FIG. 11 is a screen shot of the graph window 906 in which a forecasting range 950 is displayed along with the forecast line 704. As described with regard to FIG. 10, the open incidents line 602 plots actual incident data measured up to a point in time 918. The forecast line 704 extends from the point in time 918 into the future. The forecast range communicates the range in which the selected predictive model expects the incident data to fall within a set confidence level. This may be determined, for example, based on an error distribution calculated from the automatic predictive model selection and forecasting. The confidence level may be set by a user (e.g., input manually or selected from a drop-down menu), or automatically set.

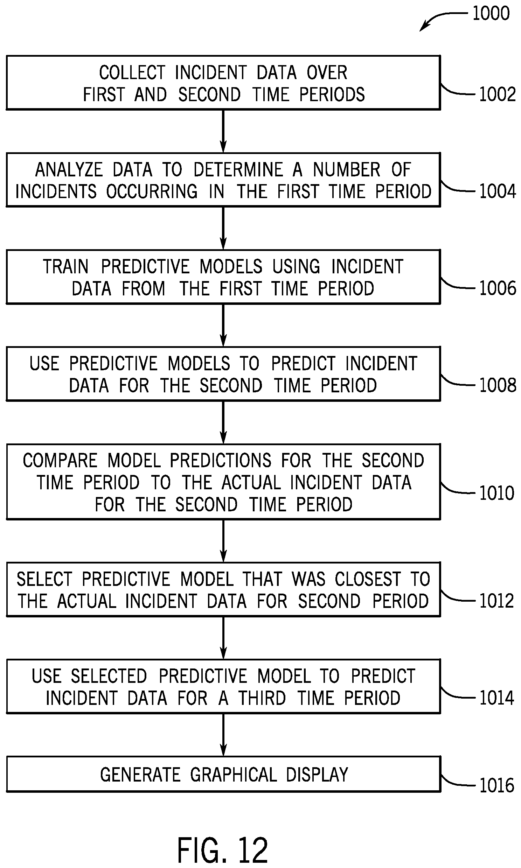

FIG. 12 is a flow chart of a process 1000 for forecasting incident data. At block 1002, incident data is collected over first and second time periods. The incident data may include a number of open incidents, a number of new incidents, a number of closed incidents, a total number of incidents, or some other value. Though the disclosed embodiments are directed to incidents, it should be understood that the disclosed techniques may also be applied to other events or metrics that a user may be interested in tracking. At block 1004, the collected data is analyzed to determine a number of incidents occurring in the first and/or time periods.

At block 1006, a plurality of predictive models is trained with machine learning techniques using the incident data from the first time period. As previously described, the predictive models may include, for example, a random forest prediction model, a drift prediction model, a naive seasonal prediction model, a naive seasonal drift prediction model, a linear prediction model, a seasonal trend loess prediction model, and/or one or more other predictive models. At block 1008, each of the plurality of trained predictive models are used to predict incident data over the second time period. At block 1010, the predictive model predictions for each predictive model are compared to the collected incident data over the second time period. At block 1012, the predictive model with predicted values closest to the collected incident values over the second time period is selected.

At block 1014, the selected predictive model is used to predict incident data over a third time period. The prediction may be based on the incident data from the first time period and/or the second time period, or some other time period. At block 1016, a graphical display is generated that includes the predicted incident data over the third period of time as a forecast. As shown in FIG. 10, the graphical display may include a graph of collected incident data up to a point in time and then forecasted incident data following the point in time. As previously described, the graphical display may display forecasted incident data within an allowable range of values. Further, the graphical display may include a range of forecasted values within a confidence level. The graphical display may be part of a widget that is displayed within a dashboard that may include other widgets.

The disclosed subject matter includes techniques for forecasting incident data in computer networks. Specifically, incident data is collected over first and second periods of time. Incident data from the first period of time is used to train a plurality of predictive models. The predictive models are then used to predict incident data over the second period of time. The predictions from the plurality of models are then compared to the collected incident data over the second period of time. The predictive model that best predicted the collected data over the second period of time is selected and used to predict incident data over a third period of time. In some embodiments, the incident data may include a number of open incidents, a number of new incidents, a number of closed incidents, a total number of incidents, or some other value. In some embodiments, the predicted incident data may be constrained within an allowable range of values that is configurable by the user. The predicted incident data may also include a range of values for incident data within a set confidence interval. The collected incident data over the first and/or second periods of time and the predicted incident data over the third period of time may then be incorporated into a graphical display of a graphical user interface (e.g., a widget of a dashboard).

### CLAUSES SETTING OUT FURTHER ASPECTS AND EMBODIMENTS

A1. A system, comprising: a non-transitory memory; and one or more hardware processors configured to read instructions from the non-transitory memory to perform operations comprising: analyzing a data set to determine a first number of incidents during a first period of time and a second number of incidents during a second period of time; training a plurality of respective models to generate a predicted second number of incidents during the second period of time based on the first number of incidents during the first period of time, wherein the plurality of respective models comprise a random forest model, a drift model, and a naive seasonal drift model comparing the predicted second number of incidents generated by each of the plurality of models to an actual number of incidents during the second period of time; identifying a selected model of the plurality of models with the predicted second number of incidents that was closest to the actual number of incidents during the second period of time; utilizing the selected model to predict: a third number of incidents during a third period of time, wherein the third number of incidents is within a set allowable range of values, wherein the third period of time occurs subsequent to the second period of time; an upper limit of the third number of incidents during the third period of time based on a set confidence level; and a lower limit of the third number of incidents during the third period of time based on the set confidence level; and causing to be displayed, via a graphical user interface, the predicted third number of incidents, the predicted upper limit of the third number of incidents, and the predicted lower limit of the third number of incidents during the third period of time.
A2. The system of clause A1, wherein identifying the selected model of the plurality of models comprises calculating a root mean squared error (RMSE) between the predicted second number of incidents generated by each of the plurality of models and the actual number of incidents during the second period of time.
A3. The system of clause A1, wherein the plurality of respective models is selectable via the graphical user interface.
A4. The system of clause A1, wherein identifying the selected model of the plurality of models comprises considering weights assigned to one or more of the plurality of models.
A5. The system of clause A1, wherein a first length of the first period of time, a second length of the second period of time, a third length of the third period or time, or a combination there of are configurable via the graphical user interface.
A6. The system of clause A1, wherein the allowable range of values is configurable via the graphical user interface.
A7. The system of clause A1, wherein the confidence level is configurable via the graphical user interface.
A8. The system of clause A1, wherein the operations comprise caching the predicted third number of incidents during the third period of time in a database table as a comma separated value field.
A9. A system, comprising: an enterprise management datacenter remotely located from one or more client networks; a client instance hosted by the enterprise management datacenter, wherein the client instance is generated for the one or more client networks, wherein the enterprise management datacenter is configured to perform operations comprising: analyzing a data set to determine a first number of incidents during a first period of time and a second number of incidents during a second period of time; training a plurality of respective models to generate a predicted second number of incidents during the second period of time based on the first number of incidents during the first period of time, wherein the plurality of respective models comprise a random forest model, a drift model, and a naive seasonal drift model comparing the predicted second number of incidents generated by each of the plurality of models to an actual number of incidents during the second period of time; identifying a selected model of the plurality of models with the predicted second number of incidents that was closest to the actual number of incidents during the second period of time; utilizing the selected model to predict: a third number of incidents during a third period of time, wherein the third number of incidents is within a set allowable range of values, wherein the third period of time occurs subsequent to the second period of time; an upper limit of the third number of incidents during the third period of time based on a set confidence level; and a lower limit of the third number of incidents during the third period of time based on the set confidence level; and causing to be displayed, via a graphical user interface, the predicted third number of incidents, the predicted upper limit of the third number of incidents, and the predicted lower limit of the third number of incidents during the third period of time.
A10. The system of clause A9, wherein identifying the selected model of the plurality of models comprises calculating a root mean squared error (RMSE) between the predicted second number of incidents generated by each of the plurality of models and the actual number of incidents during the second period of time.
A11. The system of clause A9, wherein the plurality of respective models is selectable via the graphical user interface.
A12. The system of clause A9, wherein a first length of the first period of time, a second length of the second period of time, a third length of the third period or time, or a combination there of are configurable via the graphical user interface.
A13. The system of clause A9, wherein the allowable range of values is configurable via the graphical user interface.
A14. The system of clause A9, wherein the confidence level is configurable via the graphical user interface.
A15. The system of clause A9, wherein the operations comprise caching the predicted third number of incidents during the third period of time in a database table as a comma separated value field.
A16. A method of forecasting event data, comprising: analyzing, via a processor, a data set to determine a first number of incidents during a first period of time and a second period of time; training, via the processor, a plurality of respective models to generate a predicted second number of incidents during a second period of time based on the first number of incidents during the first period of time, wherein the plurality of respective models comprise a random forest model, a drift model, and a naive seasonal drift model; comparing, via the processor, the predicted second number of incidents generated by each of the plurality of models to an actual number of incidents during the second period of time; identifying, via the processor, a selected model of the plurality of models with the predicted second number of incidents that was closest to the actual number of incidents during the second period of time; utilizing, via the processor, the selected model to predict: a third number of incidents during a third period of time, wherein the third number of incidents is within a set allowable range of values, wherein the third period of time occurs subsequent to the second period of time; an upper limit of the third number of incidents during the third period of time based on a set confidence level; and a lower limit of the third number of incidents during the third period of time based on the set confidence level; and displaying, via a graphical user interface, the predicted third number of incidents, the predicted upper limit of the third number of incidents, and the predicted lower limit of the third number of incidents during the third period of time.
A17. The method of forecasting event data of clause A16, comprising caching the predicted third number of incidents during the third period of time in a database table as a comma separated value field.
A18. The method of forecasting event data of clause A16, wherein identifying the selected model of the plurality of models comprises calculating a root mean squared error (RMSE) between the predicted second number of incidents generated by each of the plurality of models and the actual number of incidents during the second period of time.
A19. The method of forecasting event data of clause A16, wherein a first length of the first period of time, a second length of the second period of time, a third length of the third period or time, or a combination there of are configurable via the graphical user interface.
A20. The method of forecasting event data of clause A16, wherein the allowable range of values and the confidence level are configurable via the graphical user interface.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A system, comprising:
a non-transitory memory; and
one or more hardware processors configured to read instructions from the non-transitory memory to perform operations comprising:
analyzing a data set to determine a first number of incidents during a first period of time and a second number of incidents during a second period of time;
training a plurality of respective models to generate a predicted second number of incidents during the second period of time based on the first number of incidents during the first period of time, wherein the plurality of respective models comprise a random forest model, a drift model, and a naive seasonal drift model;
comparing the predicted second number of incidents generated by each of the plurality of models to an actual number of incidents during the second period of time;
identifying a selected model of the plurality of models with the predicted second number of incidents that was closest to the actual number of incidents during the second period of time;
utilizing the selected model to predict:
a third number of incidents during a third period of time, wherein the third number of incidents is within a set allowable range of values, wherein the third period of time occurs subsequent to the second period of time;
an upper limit of the third number of incidents during the third period of time based on a set confidence level; and
a lower limit of the third number of incidents during the third period of time based on the set confidence level; and
causing to be displayed, via a graphical user interface, the predicted third number of incidents, the predicted upper limit of the third number of incidents, and the predicted lower limit of the third number of incidents during the third period of time.

2. The system of claim 1, wherein identifying the selected model of the plurality of models comprises calculating a root mean squared error (RMSE) between the predicted second number of incidents generated by each of the plurality of models and the actual number of incidents during the second period of time.

3. The system of claim 1, wherein the plurality of respective models is selectable via the graphical user interface.

4. The system of claim 1, wherein identifying the selected model of the plurality of models comprises considering weights assigned to one or more of the plurality of models.

5. The system of claim 1, wherein a first length of the first period of time, a second length of the second period of time, a third length of the third period or time, or a combination there of are configurable via the graphical user interface.

6. The system of claim 1, wherein the allowable range of values is configurable via the graphical user interface.

7. The system of claim 1, wherein the confidence level is configurable via the graphical user interface.

8. The system of claim 1, wherein the operations comprise caching the predicted third number of incidents during the third period of time in a database table as a comma separated value field.

9. A method of forecasting event data, comprising:
analyzing, via a processor, a data set to determine a first number of incidents during a first period of time and a second period of time;
training, via the processor, a plurality of respective models to generate a predicted second number of incidents during a second period of time based on the first number of incidents during the first period of time, wherein the plurality of respective models comprise a random forest model, a drift model, and a naive seasonal drift model;
comparing, via the processor, the predicted second number of incidents generated by each of the plurality of models to an actual number of incidents during the second period of time;
identifying, via the processor, a selected model of the plurality of models with the predicted second number of incidents that was closest to the actual number of incidents during the second period of time;
utilizing, via the processor, the selected model to predict:
a third number of incidents during a third period of time, wherein the third number of incidents is within a set allowable range of values, wherein the third period of time occurs subsequent to the second period of time;
an upper limit of the third number of incidents during the third period of time based on a set confidence level; and
a lower limit of the third number of incidents during the third period of time based on the set confidence level; and
displaying, via a graphical user interface, the predicted third number of incidents, the predicted upper limit of the third number of incidents, and the predicted lower limit of the third number of incidents during the third period of time.

10. The method of forecasting event data of claim 9, comprising caching the predicted third number of incidents during the third period of time in a database table as a comma separated value field.

11. The method of forecasting event data of claim 9, wherein identifying the selected model of the plurality of models comprises calculating a root mean squared error (RMSE) between the predicted second number of incidents generated by each of the plurality of models and the actual number of incidents during the second period of time.

12. The method of forecasting event data of claim 9, wherein a first length of the first period of time, a second length of the second period of time, a third length of the third period or time, or a combination there of are configurable via the graphical user interface.

13. The method of forecasting event data of claim 9, wherein the allowable range of values and the confidence level are configurable via the graphical user interface.
